(19) **Europäisches Patentamt / European Patent Office / Office européen des brevets**

(11) **EP 4 494 799 A1**

(12) **EUROPEAN PATENT APPLICATION**
published in accordance with Art. 153(4) EPC

(43) Date of publication:
**22.01.2025 Bulletin 2025/04**

(21) Application number: **23770843.3**

(22) Date of filing: **15.03.2023**

(51) International Patent Classification (IPC):
**B23K 11/16** $^{(2006.01)}$     **B23K 11/11** $^{(2006.01)}$
**C22C 38/00** $^{(2006.01)}$     **C22C 38/02** $^{(2006.01)}$

(52) Cooperative Patent Classification (CPC):
**B23K 11/11; B23K 11/16; C22C 38/00; C22C 38/02**

(86) International application number:
**PCT/JP2023/010115**

(87) International publication number:
**WO 2023/176890 (21.09.2023 Gazette 2023/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.03.2022 JP 2022040299**

(71) Applicant: **NIPPON STEEL CORPORATION**
**Chiyoda-ku**
**Tokyo 100-8071 (JP)**

(72) Inventors:
• **KANEMITSU SHINOHARA, Moe**
**Tokyo 100-8071 (JP)**
• **FUJIMOTO, Hiroki**
**Tokyo 100-8071 (JP)**
• **MATSUDA, Kazuki**
**Tokyo 100-8071 (JP)**

(74) Representative: **Vossius & Partner**
**Patentanwälte Rechtsanwälte mbB**
**Siebertstrasse 3**
**81675 München (DE)**

(54) **SPOT-WELDED JOINT, METHOD FOR PRODUCING SPOT-WELDED JOINT, HIGH-STRENGTH STEEL MEMBER FOR SPOT-WELDED JOINT, AND METHOD FOR PRODUCING HIGH-STRENGTH STEEL MEMBER FOR SPOT-WELDED JOINT**

(57)     A spot-welded joint according to an aspect of the present invention includes: a plurality of steel sheet portions including a high-strength steel sheet portion having a Vickers hardness of 530 HV or higher; a nugget joining the high-strength steel sheet portion and another steel sheet portion of the plurality of steel sheet portions; and a corona bond which is formed in a ring shape around the nugget in a plan view in a direction perpendicular to a surface of the high-strength steel sheet portion and at which solid-phase joining is performed between the high-strength steel sheet portion and the other steel sheet portion. A coating layer is not present in a region where the corona bond is present, and an oxygen concentration of the corona bond at a position 50 μm apart outward from an outer circumference of the nugget in the plan view is 15.0 mass% or lower.

FIG. 1

## Description

Technical Field of the Invention

The present invention relates to a spot-welded joint, a method for producing a spot-welded joint, a high-strength steel member for a spot-welded joint, and a method for producing a high-strength steel member for a spot-welded joint.
Priority is claimed on Japanese Patent Application No. 2022-040299, filed March 15, 2022, the content of which is incorporated herein by reference.

Related Art

Spot-welded joints produced by performing spot welding on high-strength steel members have a problem of low joint strength of a weld. In particular, when high-strength steel members have a tensile strength of 1,800 MPa or higher (or high-strength steel members have a Vickers hardness of 530 HV or higher), the tensile shear strength (TSS) of a spot-welded portion significantly decreases. This is considered to be because a large amount of C contained in the high-strength steel members causes embrittlement of the weld.
In order to improve joining strength of spot-welded joints using high-strength steel sheets as base materials, various studies have been conducted.
Patent Document 1 discloses a spot welding member obtained by performing spot welding on a plurality of steel sheets in which at least one of the plurality of steel sheets is a high-strength cold-rolled steel sheet having no coating layer on a surface and having a tensile strength of 780 MPa or higher, at least one of the plurality of steel sheets is a zinc-coated steel sheet having a zinc-based coating layer on a surface, and a surface layer Zn concentration inside a corona bond of a spot-welded portion is 1 mass% or higher and less than 25 mass%.
Patent Document 2 discloses a spot welding steel sheet having a tensile strength of 400 to 700 MPa, a C content of a range of 0.05 to 0.12 mass% in a composition of a base material, a carbon equivalent Ceqt represented by the following formula {Ceqt = C + Si/30 + Mn/20 + 2P + 4S} in a range of 0.18 mass% or higher and 0.22 mass% or lower, a carbon equivalent Ceqh of 0.08 mass% or higher which is represented by the following formula {Ceqh = C + Si/40 + Cr/20}, and an average oxygen concentration OC (%) in a range represented by the following formula {OC ≤ 0.5}, the average oxygen concentration being measured by GDS analysis at a depth within a range of to 3 μm from a surface of the steel sheet.
Patent Document 3 discloses a high-strength resistance welded joint including, in an average composition in a nugget, P: 0.03% or lower, S: 0.01% or lower, and O: 0.02% or lower in terms of mass%, and further including one or two or more of Mg, La, and Ce in a total amount of 0.005% or lower, with a remainder being Fe and unavoidable impurities, in which an average hardness in the nugget is 320 to 500 in HV, a distribution density of oxide-based inclusions having a particle size of 1 μm or larger present in the nugget is 20 pieces/mm$^2$ or less, a maximum particle size of all inclusions is 50 μm or smaller, and a metallographic structure in the nugget includes tempered martensite and lower bainite.

Citation List

Patent Document

Patent Document 1: Japanese Unexamined Patent Application, First Publication No. 2020-179413
Patent Document 2: Japanese Unexamined Patent Application, First Publication No. 2012-102370
Patent Document 3: Japanese Unexamined Patent Application, First Publication No. 2014-180698

Summary of Invention

Problems to be Solved by the Invention

However, the tensile strength of the steel sheet studied in Patent Document 1 is 1,570 MPa at the maximum. Patent Document 1 does not provide a study on a high-strength steel member having a tensile strength of 1,800 MPa or higher (or a Vickers hardness of 530 HV or higher) with which embrittlement of a spot-welded portion is more remarkable.
The tensile strength of a steel sheet to be studied in Patent Document 2 is 700 MPa at the maximum. Patent Document 2 does not provide a study on a high-strength steel member having a tensile strength of 1,800 MPa or higher (or a Vickers hardness of 530 HV or higher) with which embrittlement of a spot-welded portion is more remarkable. In addition, in Patent Document 2, the strength of a weld of the spot-welded joint is improved with an oxygen concentration of a base steel sheet, but a configuration of the spot-welded joint is not particularly studied.

The Vickers hardness of the nugget disclosed in Patent Document 3 is in a range of 320 HV to 500 HV. In consideration of the nugget hardness, the tensile strength of the steel sheet to be studied in Patent Document 3 is estimated to be lower than 1,800 MPa (or a Vickers hardness of lower than 530 HV). It is presumed that Patent Document 3 does not provide a study on a high-strength steel member having a tensile strength of 1,800 MPa or higher (or a Vickers hardness of 530 HV or higher) with which embrittlement of a spot-welded portion is more remarkable.

In view of the above circumstances, objects of the present invention are to provide a spot-welded joint that is excellent in TSS while including one or more high-strength steel sheet portions having a Vickers hardness of 530 HV or higher, and a method for producing the same. Further, other objects of the present invention are to provide a high-strength steel member for a spot-welded joint which enables a spot-welded joint excellent in TSS to be produced while having a Vickers hardness of 530 HV or higher, and a method for producing the same.

Means for Solving the Problem

The gist of the present invention is as follows.

(1) A spot-welded joint according to a first embodiment of the present invention includes: a plurality of steel sheet portions including a high-strength steel sheet portion having a Vickers hardness of 530 HV or higher; a nugget that joins the high-strength steel sheet portion and another steel sheet portion of the plurality of steel sheet portions; and a corona bond which is formed in a ring shape around the nugget in a plan view in a direction perpendicular to a surface of the high-strength steel sheet portion and which solid-phase-joins the high-strength steel sheet portion and the other steel sheet portion. A coating layer is not present in a region where the corona bond is present, and the oxygen concentration of the corona bond at a position 50 $\mu$m apart outward from an outer circumference of the nugget in the plan view is 15.0 mass% or lower.

(2) Preferably, in the spot-welded joint according to (1) described above, the high-strength steel sheet portion has a carbon content of more than 0.30 mass%.

(3) Preferably, in the spot-welded joint according to (1) or (2) described above, the nugget has a carbon content of 0.29 mass% or more.

(4) Preferably, in the spot-welded joint according to any one of (1) to (3) described above, a diameter of the nugget measured along a boundary line between the steel sheet portions adjacent to each other is 4.5$\sqrt{t}$ or larger in a cross section passing through a center of the nugget and perpendicular to surfaces of the steel sheet portions. Here, t represents a smaller one of sheet thicknesses of the two adjacent steel sheet portions forming the boundary line.

(5) According to a second embodiment of the present invention, there is provided a method for producing a spot-welded joint including: a step of providing a high-strength steel member having a surface treatment part and having a Vickers hardness of 530 HV or higher; a step of overlaying a plurality of steel members such that the surface treatment part is disposed on a mating surface between the high-strength steel member and another steel member; and a step of spot welding the plurality of steel members such that a nugget and a corona bond are accommodated on an inner side of the surface treatment part in a plan view in a direction perpendicular to the surface treatment part. **In** the step of overlaying, a coating layer is not provided in the surface treatment part and a region in contact with the surface treatment part. The surface treatment part has a ten-point average roughness of 3.5 $\mu$m or lower, and the surface treatment part has an oxygen concentration of 18.0 mass% or lower.

(6) Preferably, the method for producing a spot-welded joint according to (5) described above further includes a step of forming the surface treatment part on a surface of the high-strength steel member before the step of providing the high-strength steel member.

(7) Preferably, the method for producing a spot-welded joint according to (6) described above further includes a step of hot-stamping a high-strength steel sheet before forming the surface treatment part. In the step of forming the surface treatment part, the surface treatment part is formed on the surface of the hot-stamped high-strength steel member.

(8) Preferably, the method for producing a spot-welded joint according to (6) or (7) described above further includes a step of removing a part of a coating layer on the surface of the high-strength steel member before forming the surface treatment part. In the step of forming the surface treatment part, the surface treatment part is formed in a region from which the coating layer is removed.

(9) Preferably, in the method for producing a spot-welded joint according to any one of (5) to (8) described above, the high-strength steel member has a carbon content of more than 0.30 mass%.

(10) Preferably, in the method for producing a spot-welded joint according to any one of (5) to (9) described above, the nugget formed by the spot welding has a carbon content of 0.29 mass% or more.

(11) Preferably, in the method for producing a spot-welded joint according to any one of (5) to (10) described above, a diameter of the nugget formed by the spot welding is 4.5$\sqrt{t}$ or larger. Here, the diameter of the nugget is a size of the nugget measured along a boundary line between the steel members adjacent to each other in a plane passing through a center of the nugget and perpendicular to surfaces of the steel members, and t represents a smaller one of sheet thicknesses of the two adjacent steel members forming the boundary line.

(12) Preferably, in the method for producing a spot-welded joint according to any one of (6) to (11) described above, the surface treatment part is formed by shot blasting or wet blasting.

(13) In a high-strength steel member for a spot-welded joint according to a third embodiment of the present invention, a Vickers hardness is 530 HV or higher, a surface treatment part having no coating layer is provided, the surface treatment part has a ten-point average roughness of 3.5 μm or lower, and the oxygen concentration of the surface treatment part is 18.0 mass% or lower.

(14) Preferably, in the high-strength steel member for a spot-welded joint according to (13) described above, a carbon content is more than 0.30 mass%.

(15) Preferably, in the high-strength steel member for a spot-welded joint according to (13) or (14) described above, the surface treatment part is provided all over a surface of the high-strength steel member.

(16) A method for producing a high-strength steel member for a spot-welded joint according to a fourth embodiment of the present invention includes a step of forming a surface treatment part on a surface of a high-strength steel member having a Vickers hardness of 530 HV or higher. A coating layer is not provided on the surface treated part. The surface treatment part has a ten-point average roughness of 3.5 μm or lower, and the oxygen concentration of the surface treatment part is 18.0 mass% or lower.

(17) Preferably, the method for producing a high-strength steel member for a spot-welded joint according to (16) described above further includes a step of hot-stamping a high-strength steel sheet before forming the surface treatment part. In the step of forming the surface treatment part, the surface treatment part is formed on the surface of the hot-stamped high-strength steel member.

(18) Preferably, the method for producing a high-strength steel member for a spot-welded joint according to (16) or (17) described above further includes a step of removing a part of a coating layer on the surface of the high-strength steel member before forming the surface treatment part. In the step of forming the surface treatment part, the surface treatment part is formed in a region from which the coating layer is removed.

(19) Preferably, in the method for producing a high-strength steel member for a spot-welded joint according to any one of (16) to (18) described above, the high-strength steel member has a carbon content of more than 0.30 mass%.

(20) Preferably, in the method for producing a high-strength steel member for a spot-welded joint according to any one of (16) to (19) described above, the surface treatment part is provided all over the surface of the high-strength steel member.

(21) Preferably, in the method for producing a high-strength steel member for a spot-welded joint according to any one of (16) to (20) described above, the surface treatment part is formed by shot blasting or wet blasting.

Effects of the Invention

According to the present invention, it is possible to provide a spot-welded joint that is excellent in TSS while including one or more high-strength steel sheet portions having a Vickers hardness of 530 HV or higher, and a method for producing the same. Further, according to the present invention, it is possible to provide a high-strength steel member for a spot-welded joint which enables a spot-welded joint that is excellent in TSS to be produced while having a Vickers hardness of 530 HV or higher, and a method for producing the same.

Brief Description of the Drawings

FIG. 1 is a cross-sectional view of a spot-welded joint according to a first embodiment.
FIG. 2A is a relationship diagram between nugget diameter and surface oxygen concentration of a corona bond.
FIG. 2B is a relationship diagram between the nugget diameter and the surface oxygen concentration of the corona bond.
FIG. 3A is a schematic view of a step S1 of forming a surface treatment part.
FIG. 3B is a schematic view of a step S2 of overlaying steel members.
FIG. 3C is a schematic view of a step S3 of spot welding the steel members.

Embodiments of the Invention

<Spot-welded joint According to First Embodiment>

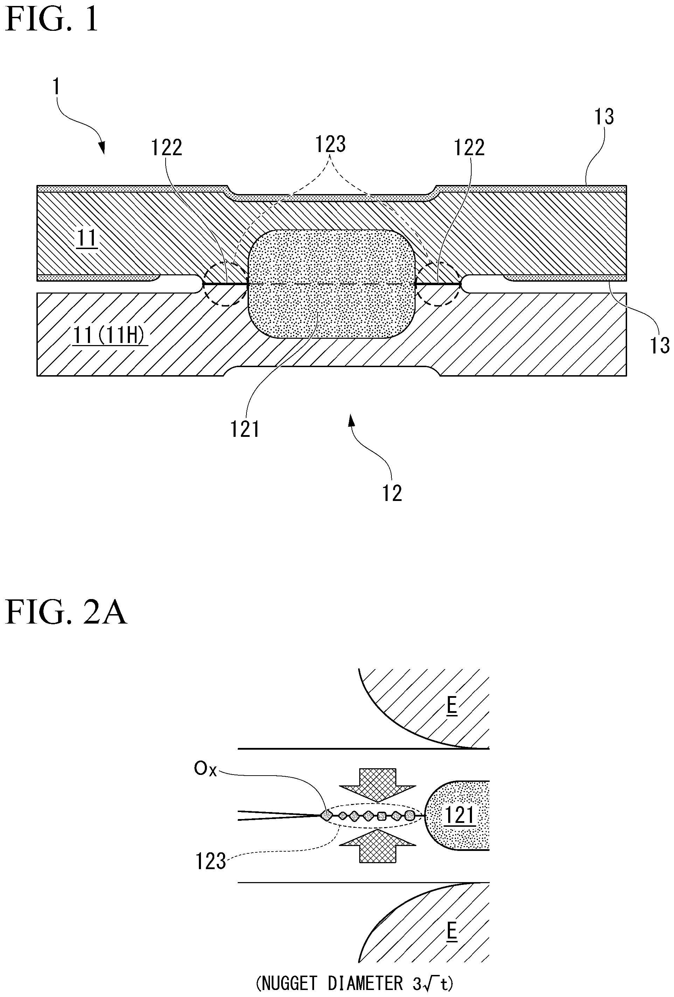

First, a spot-welded joint 1 according to a first embodiment of the present invention is described. For example, as illustrated in the cross-sectional view of FIG. 1, the spot-welded joint 1 according to the first embodiment includes a plurality of steel sheet portions 11 including a high-strength steel sheet portion 11H having a Vickers hardness of 530 HV or higher, a nugget 121 that joins the high-strength steel sheet portion 11H and another steel sheet portion 11 of the plurality of steel sheet portions 11, and a corona bond 122 which is formed in a ring shape around the nugget 121 in a plan view in a direction perpendicular to a surface of the high-strength steel sheet portion (hereinafter, referred to as the plan view) and which solid-phase-joins the high-strength steel sheet portion 11H and the other steel sheet portion 11. A coating layer 13 is not present in a region where the corona bond 122 is present, and the oxygen concentration of the corona bond 122 at a position 50 μm apart outward from an outer circumference of the nugget 121 in the plan view is 15.0 mass% or lower. Hereinafter, the surface oxygen concentration of the corona bond 122 formed on the surface of the high-strength steel sheet portion 11H at a position 50 μm apart outward from an outer circumference of the nugget may be simply referred to as the "surface oxygen concentration of the corona bond" or the like. In addition, a region where the corona bond 122 is present between the high-strength steel sheet portion 11H and the other steel sheet portion 11 may be referred to as a "corona bond portion 123".

In the spot-welded joint 1 according to the first embodiment, the TSS is improved through modification of the corona bond 122. The present inventors have found that the TSS of the spot-welded joint 1 including the high-strength steel sheet portion 11H having a Vickers hardness of 530 HV or higher is dramatically improved by decreasing the oxygen concentration in the corona bond 122 formed on the high-strength steel sheet portion 11H. Hereinafter, the spot-welded joint 1 according to the first embodiment will be described in detail.

(Steel Sheet Portion 11, High-Strength Steel Sheet Portion 11H)

Although details of a producing method will be described below, the spot-welded joint 1 is formed by spot-joining steel members obtained by forming steel sheets serving as base materials (joint materials). The steel sheet portion 11 represents a flat part on the same surface as a spot-welded portion in a region corresponding to a steel member or a steel sheet before spot welding in the spot-welded joint 1. For example, in a case where the steel member before spot welding is a hat-shaped component, the steel sheet portion 11 is a spot-welded flange portion. Alternatively, in a case where spot welding is performed on a flat sheet component to form the spot-welded joint 1, the steel sheet portion 11 is the entire flat sheet component.

Two steel sheet portions 11 may be provided as exemplified in FIG. 1, or three or more steel sheet portions may be provided. In addition, one or more of the plurality of steel sheet portions 11 are high-strength steel sheet portions 11H having a Vickers hardness of 530 HV or higher. Consequently, the strength of the base material of the spot-welded joint 1 dramatically increases. A good correlation is made between the tensile strength and the Vickers hardness of steel, and the Vickers hardness of 530 HV corresponds to a tensile strength of about 1,800 MPa. A Vickers hardness of 580 HV corresponds to a tensile strength of about 2,000 MPa.

According to the related art, when the Vickers hardness of the steel sheet portion 11 is 530 HV or higher, the TSS of the spot-welded joint 1 decreases, but in the spot-welded joint 1 according to the first embodiment, the TSS is secured by reducing the oxygen concentration of the corona bond 122 to be described below.

The number of high-strength steel sheet portions 11H is not limited. In the spot-welded joint 1 illustrated in FIG. 1, the high-strength steel sheet portion 11H and the steel sheet portion 11 having a Vickers hardness of lower than 530 HV are combined, but two high-strength steel sheet portions 11H may be combined. Hereinafter, for convenience, the steel sheet portion 11 having a Vickers hardness of lower than 530 HV is referred to as a "normal steel sheet portion 11".

(Nugget 121 and Corona Bond 122)

The nugget 121 is a melted and solidified portion formed in a weld in spot welding. The nugget 121 joins at least the high-strength steel sheet portion 11H and another steel sheet portion 11 of the plurality of steel sheet portions 11. Preferably, the nugget 121 joins all the plurality of steel sheet portions 11.

The corona bond 122 is a ring-shaped solid-phase joint portion between the two steel sheet portions 11 around the nugget 121 in spot welding. The corona bond 122 causes solid-phase joining between the high-strength steel sheet portion 11H and the other steel sheet portion 11. However, in the corona bond 122, the steel sheet portion 11 is not melted and solidified, and only solid-phase joining of the two steel sheet portions 11 is performed.

In the spot-welded joint 1 illustrated in FIG. 1, since the steel sheet portion 11 has only one overlapping surface, only one corona bond 122 is formed for one spot-welded portion. If the steel sheet portion 11 has a plurality of overlapping surfaces, the corona bond 122 is formed on each of the plurality of overlapping surfaces. Hereinafter, portions including the nugget 121 and the corona bond 122 that join the plurality of steel sheet portions 11 are collectively referred to as "spot-welded portions 12".

**EP 4 494 799 A1**

(Oxygen concentration of Corona Bond 122 and with or without Coating)

As a result of various studies on the TSS of the spot-welded joint 1 including the high-strength steel sheet portion 11H by the present inventors, the following have been clarified.

First, regarding the spot-welded joint 1 including the high-strength steel sheet portion 11H having the Vickers hardness of 530 HV or higher, it has been found that the corona bond 122 greatly affects the joining strength of the spot-welded joint 1. Since a large amount of C contained in the high-strength steel sheet portion 11H causes embrittlement of the weld, and the joining strength of the melted and solidified portion decreases, it is estimated that the joining strength of the corona bond 122 relatively significantly affects the joining strength of the spot-welded joint 1.

Next, a good correlation was found between the oxygen concentration of the corona bond 122 formed on the surface of the high-strength steel sheet portion 11H and the TSS of the spot-welded joint 1. The lower the oxygen concentration, the higher the TSS. This is presumed to be because the higher the oxygen concentration of the corona bond 122, the more the oxide of the corona bond 122 increases, and this causes the corona bond 122 to peel off.

On the other hand, no correlation was found between the TSS and the oxygen concentration of the corona bond between the two normal steel sheet portions 11. For example, in a spot-welded joint including the normal steel sheet portions 11 without the high-strength steel sheet portion 11H, even if the oxygen concentration of the corona bond is reduced, the TSS improvement effect is unlikely to be obtained. Even in the related art of a spot-welded joint without using the high-strength steel sheet portion 11H having a Vickers hardness of 530 HV or higher, the relationship between the oxygen concentration or the oxide content of the corona bond and the TSS has not been reported. It is presumed that this is because, in a spot-welded joint including the normal steel sheet portion 11 without the high-strength steel sheet portion 11H, the corona bond has little effect on the joining strength of the spot-welded joint 1.

In addition, in the spot-welded joint 1 including two normal steel sheet portions 11 and one high-strength steel sheet portion 11H, even if the oxygen concentration of the corona bond between the two normal steel sheet portions 11 was reduced, the TSS improvement effect was not obtained.

Additionally, in a case where the corona bond portion 123 between the high-strength steel sheet portion 11H and the other adjacent steel sheet portion 11 includes coating such as hot-dip Zn coating, the TSS improvement effect due to reduction in the oxygen concentration was not obtained. When spot welding is performed in a state where a coating layer is present on a contact surface between steel members, an inclusion of coating or the like is also formed in the corona bond portion 123 in addition to an oxide. It is presumed that the inclusion derived from a coating component hinders realization of the TSS improving effect. Here, the corona bond portion 123 indicates a region where the corona bond 122 is present between the high-strength steel sheet portion 11H and the other steel sheet portion 11.

For the above reason, in the spot-welded joint 1 according to the first embodiment, a coating layer 13 is not present in the corona bond portion at which the high-strength steel sheet portion 11H and the other steel sheet portion 11 are joined. Note that the coating layer 13 does not need to be present at least at a corona bond portion between the high-strength steel sheet portion 11H and the other steel sheet portion 11 (that is, the coating layer 13 is excluded from the corona bond portion). Of the surface of the high-strength steel sheet portion 11H, the corona bond 122 is not formed on a surface that is not overlaid with another steel sheet portion 11, and thus the coating layer 13 may be formed on the surface. Of the surface of the high-strength steel sheet portion 11H, the coating layer 13 may be formed in a region other than the corona bond portion even on the surface overlaid with the other steel sheet portion 11. The coating layer 13 present outside the corona bond portion of the high-strength steel sheet portion 11H does not adversely affect the TSS of the spot-welded joint 1. In addition, a coating layer may be present in a corona bond portion between the normal steel sheet portions 11.

Further, the oxygen concentration of the corona bond 122 at which solid-phase joining is performed between the high-strength steel sheet portion 11H and the other steel sheet portion 11 is 15.0 mass% or lower at a position 50 $\mu$m apart outward from an outer circumference of the nugget 121 in the plan view. Preferably, the oxygen concentration of the corona bond 122 at a position 50 $\mu$m apart outward from the outer circumference of the nugget 121 is 14.0 mass% or lower, 13.0 mass% or lower, 12.0 mass% or lower, or 10.0 mass% or lower. The lower limit value of the oxygen concentration of the corona bond 122 between the high-strength steel sheet portion 11H and the other steel sheet portion 11 is not particularly limited and may be 0 mass%. However, it is difficult to completely remove oxygen in consideration of producing costs or the like of the spot-welded joint 1. Therefore, the oxygen concentration of the corona bond 122 between the high-strength steel sheet portion 11H and the other steel sheet portion 11 may be 1.0 mass% or higher, 2.0 mass% or higher, or 5.0 mass% or higher.

The oxygen concentration of the corona bond 122 that is not in contact with the high-strength steel sheet portion 11H is not particularly limited. As described above, this is because there is no correlation between the oxygen concentration and the TSS in a mating surface of the normal steel sheet portions 11 having a tensile strength of less than 1,800 MPa (that is, the Vickers hardness is less than 530 HV).

The spot-welded joint 1 according to the first embodiment can obtain the TSS improvement effect as long as the above conditions are satisfied. On the other hand, by applying preferable aspects to be described below, the TSS and other mechanical properties of the spot-welded joint 1 according to the first embodiment can be further improved.

6

(Carbon Content of High-Strength Steel Sheet Portion 11H: Preferably More Than 0.30 mass%)

The carbon content in the high-strength steel sheet portion 11H is not particularly limited, and is preferably, for example, more than 0.30 mass%, 0.31 mass% or more, 0.33 mass% or more, 0.36 mass% or more, or 0.40 mass% or more. Consequently, a strength improving effect by the technology of the present disclosure can be obtained. On the other hand, by setting the carbon content in the high-strength steel sheet portion 11H to 0.50 mass% or lower, 0.48 mass% or lower, 0.45 mass% or lower, 0.42 mass% or lower, or 0.40 mass% or lower, the hardness of the nugget 121 can be reduced, and the joining strength of the spot-welded joint 1 can be further enhanced. The carbon content of the normal steel sheet portion 11 that may be combined with the high-strength steel sheet portion 11H is also not particularly limited, and may be, for example, 0.2 mass% or lower.

Note that C contained in the high-strength steel sheet portion 11H may cause embrittlement of the weld. However, in the spot-welded joint 1 according to the first embodiment, the TSS is increased using the corona bond. Hence, even in a case where the carbon content of the high-strength steel sheet portion 11H is high, the joining strength of the weld is increased in the spot-welded joint 1 according to the first embodiment.

(Carbon Content of Nugget 121: Preferably 0.29 mass% or More)

The carbon content of the nugget 121 is also not particularly limited, and may be, for example, 0.29 mass% or more, 0.31 mass% or more, 0.35 mass% or more, or 0.38 mass% or more. Consequently, a strength improving effect by the technology of the present disclosure can be obtained. On the other hand, the carbon content of the nugget 121 may be 0.45 mass% or lower, 0.42 mass% or lower, or 0.38 mass% or lower. This makes it possible to avoid excessive curing of the nugget 121 and to further increase the joining strength of the spot-welded joint 1.

(Diameter of Nugget 121: Preferably $4.5\sqrt{t}$ or Larger)

The diameter of the nugget 121 is not particularly limited, and it is possible to select various values within a range in which the high-strength steel sheet portion and another steel sheet portion can be joined. On the other hand, according to experimental results obtained by the present inventors, it has become clear that, as the diameter of the nugget 121 increases, the oxygen concentration of the corona bond 122 further decreases, and the TSS is further improved.

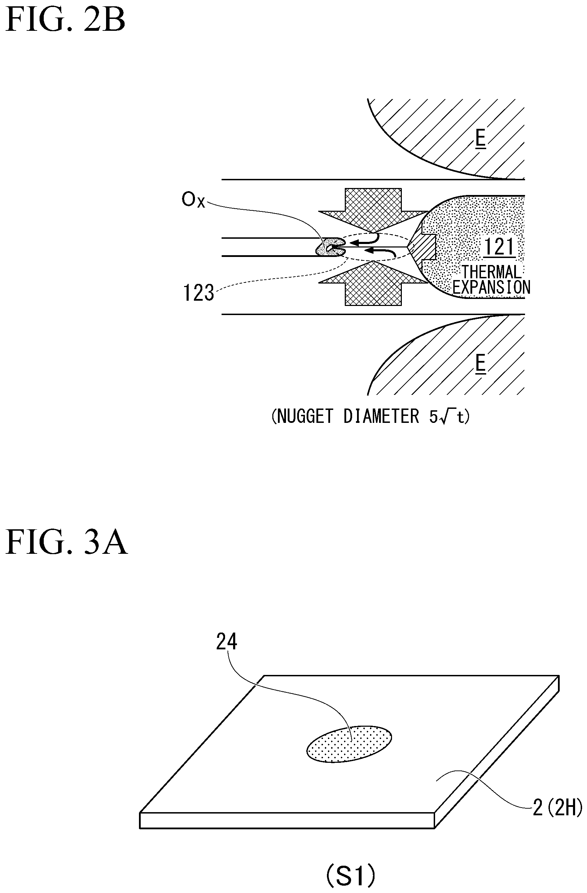

This is presumed to be due to the amount of thermal expansion at the time of forming the nugget 121. As illustrated in FIGS. 2A and 2B, the nugget 121 is thermally expanded during spot welding. This thermal expansion applies pressure to the corona bond 122 in an outward direction of the nuggets 121. It is considered that this pressure causes plastic flow in the corona bond portion and discharges an oxide Ox to the outside of the corona bond portion. As a heat input during spot welding increases and a nugget diameter increases, the pressure applied to the corona bond 122 also increases. Hence, it is considered that a discharge amount of the oxide Ox increases as the nugget diameter increases, and the TSS is further improved.

According to the experimental results obtained by the present inventors, in a case where a diameter D of the nugget 121 was $4.5\sqrt{t}$ or larger, the TSS was further improved. Here, the diameter D of the nugget 121 is a size of the nugget 121 measured along a boundary line between adjacent steel sheet portions 11 in a cross section passing through the center of the nugget 121 and perpendicular to the surfaces of the steel sheet portions 11. In addition, "t" represents the smaller one of sheet thicknesses of the two adjacent steel sheet portions 11 forming the boundary line serving as a reference for measurement of the nugget 121. In a case where three or more steel sheet portions 11 are included in the spot-welded joint 1, and two or more boundary lines are formed, two or more diameters D and two or more sheet thicknesses t corresponding to the two or more boundary lines are identified.

For example, in a case where two steel sheet portions 11 are included in the spot-welded joint 1, one boundary line of the steel sheet portions 11 is formed. The diameter D of the nugget 121 represents a width of the nugget 121 measured along the boundary line, and t represents a thickness of the thinner one of the two steel sheet portions 11. It is preferable that $D \geq 4.5\sqrt{t}$ is satisfied on the boundary line. In this case, the TSS is further improved.

In a case where three or more steel sheet portions 11 are included in the spot-welded joint, two or more boundary lines of the steel sheet portions 11 are formed. In this case, regarding at least one boundary line, the diameter D of the nugget 121 and the sheet thickness t of the thinner one of the steel sheet portions 11 forming a corresponding boundary line preferably satisfy $D \geq 4.5\sqrt{t}$, and more preferably satisfy $D \geq 4.5\sqrt{t}$ on all the boundary lines. The diameter of the nugget 121 is more preferably $4.8\sqrt{t}$ or larger or $5.0\sqrt{t}$ or larger. In addition, on the boundary line formed by the high-strength steel sheet portion 11H, the diameter D of the nugget 121 and the sheet thickness t of the thinner one of the steel sheet portions 11 forming a corresponding boundary line preferably satisfy $D \geq 4.5\sqrt{t}$.

(Sheet Thickness, Hardness, Tensile Strength, and Surface Treatment of Steel Sheet Portion 11)

As described above, the Vickers hardness of the high-strength steel sheet portion 11H is 530 HV or higher. From the viewpoint of improving the strength and the like of the spot-welded joint 1, the higher the Vickers hardness of the high-strength steel sheet portion 11H, the more preferable. Hence, the Vickers hardness of the high-strength steel sheet portion 11H may be 550 HV or higher, 580 HV or higher, 600 HV or higher, or 620 HV or higher. The upper limit value of the Vickers hardness of the high-strength steel sheet portion 11H is not particularly limited, and the Vickers hardness of the high-strength steel sheet portion 11H may be 700 HV or lower, 680 HV or lower, or 650 HV or lower from the viewpoint of improving the joining strength and the like of the spot-welded joint 1.

The tensile strength of the high-strength steel sheet portion 11H is not particularly limited. In general, a good correlation is made between the tensile strength and the Vickers hardness of steel, and the Vickers hardness of 530 HV corresponds to the tensile strength of about 1,800 MPa. A Vickers hardness of 580 HV corresponds to a tensile strength of about 2,000 MPa. Hence, if the hardness of the high-strength steel sheet portion 11H is defined, it is not necessary to additionally define the tensile strength of the high-strength steel sheet portion 11H. On the other hand, the tensile strength of the high-strength steel sheet portion 11H may be defined as 1,900 MPa or higher, 2,000 MPa or higher, or 2,100 MPa or higher. The upper limit of the tensile strength of the high-strength steel sheet portion 11H is not particularly limited. For example, the tensile strength of the high-strength steel sheet portion 11H may be defined as 2,800 MPa or lower, 2,500 MPa or lower, or 2,300 MPa or lower.

The tensile strength of the normal steel sheet portion 11 having a Vickers hardness of less than 530 HV which is combined with the high-strength steel sheet portion 11H is also not particularly limited. For example, the tensile strength of the normal steel sheet portion 11 may be defined as 1,700 MPa or lower, 1,500 MPa or lower, or 1,200 MPa or lower.

The metallographic structures of the steel sheet portions 11 and the high-strength steel sheet portion 11H are not particularly limited. For example, 90 area% or more, 92 area% or more, or 95 area% or more of the metallographic structure of the high-strength steel sheet portion 11H may be martensite. Martensite indicates a concept in which both fresh martensite which is not tempered martensite and tempered martensite which is martensite subjected to tempering are included. The upper limit value of a proportion of martensite in the metallographic structure of the high-strength steel sheet portion 11H is not particularly limited, and for example, the proportion may be 100 area% or lower, 99 area% or lower, or 98 area% or lower.

In the spot-welded joint 1 according to the first embodiment, it is necessary for the coating layer not to be present in the region (corona bond portion) where the corona bond 122 at which solid-phase joining is performed between the high-strength steel sheet portion 11H and the other steel sheet portion 11 is present. On the other hand, as long as the requirement is satisfied, the steel sheet portion 11 may have the coating layer 13 on a partial or entire surface thereof. For example, the coating layer 13 disposed on a surface of a sheet assembly does not adversely affect the corona bond 122. In addition, as long as even the coating layer 13 present between the two adjacent steel sheet portions 11 is disposed outside the corona bond portion, the corona bond 122 is not adversely affected. Examples of the coating layer 13 include hot-dip galvanizing layer, hot-dip alloy galvanizing layer, alloying hot-dip galvanizing layer, electro-galvanizing layer, and electro-Al coating layer. In addition, a surface treatment film such as a coating film and a chemical conversion treatment film may be disposed on a partial or entire surface of the steel sheet portion 11.

(Measurement Method)

Hereinafter, a method for measuring parameters defining the spot-welded joint 1 according to the first embodiment will be described. Note that there is no need to perform all the measurements to be described below on a sample of one spot-welded portion. In general, two or more spot-welded portions are provided on the same steel sheet portion in the spot-welded joint, and parameters of these spot-welded portions are substantially the same. Hence, a result of measurement performed on samples of two or more spot-welded portions can be regarded as a result of measurement of parameters of one spot-welded portion. Even in the case of determining whether or not a method for producing a spot-welded joint corresponds to a method for producing a spot-welded joint according to a second embodiment to be described below, a result of measurement performed on samples of two or more spot-welded portions can be regarded as a result of measurement of parameters of one spot-welded portion.

A method for measuring the Vickers hardness of the steel sheet portion 11 is as follows. In a cross-sectional view, a cut surface perpendicular to the surface of the steel sheet portion is formed at a position 10 mm or more apart from the outer circumference of the corona bond. The position 10 mm or more apart from the outer circumference of the corona bond on the cut surface for measuring the carbon content of the nugget 121, to be described below, can also be used as a sample for measuring the hardness of the steel sheet portion. On this cut surface, the Vickers hardness is measured at a position of 1/4t from the surface of the steel sheet portion. There are three measurement points. The load is 0.5 kgf. The measurement points are arranged substantially parallel to the surface of the steel sheet portion, and intervals between the measurement points are 0.5 mm. The average value of the measured values at the three points is regarded as the Vickers hardness of the steel sheet portion. The cut surface for measuring the hardness of a steel member can be formed at any flat location, for example, a flange portion.

The tensile strength of the steel sheet portion 11 is measured by a tensile test in accordance with "Metallic materials-Tensile testing-Method" of JIS Z 2241:2011. A test piece is the No. 13B test piece. The test piece is collected from a flat part. In addition, the test piece is collected from an outside of a heat-affected zone of the spot-welded portion. A collection location of the test piece may be significantly separated from the nugget. For example, in a case where the high-strength steel sheet portion is a flange portion of a hat-shaped member, a tensile test piece may be collected from the flange portion, which is a portion where a nugget is provided, or a tensile test piece may be collected from a longitudinal wall portion or a horizontal wall portion. This measurement method is also applied to measurement of the tensile strength of a steel member before spot welding to be described below.

A method for measuring the oxygen concentration of the corona bond 122 at the position 50 $\mu$m apart outward from the outer circumference of the nugget 121 is as follows. First, a peel test is performed on the spot-welded joint 1 in accordance with the provision of "Routine test of resistance spot and projection welds" of JIS Z 3144:2013 to break the spot-welded portion 12. Consequently, a surface (also referred to as a fracture surface) of the corona bond 122 at which solid-phase joining is performed between the high-strength steel sheet portion and the other steel sheet portion is exposed. Subsequently, the oxygen concentration of the corona bond 122 is measured by surface EDX analysis. Acceleration voltage is 15 kV. Locations of measurement points are on the corona bond 122 formed at a position 50 $\mu$m apart outward from the outer circumference of the nugget 121 in the plan view. Here, 20 measurement points are provided per corona bond 122. The measurement points are distributed at substantially equal intervals along the outer circumference of the nugget 121. In a case where the nugget 121 is round, an angle between adjacent measurement points and the center of the nugget 121 is about 18°.

This measurement is performed on the surface (fracture surface) on a side of the high-strength steel sheet portion 11H on which the solid-phase joining is performed by the corona bond 122. However, in a case where the high-strength steel sheet portions 11H are solid-phase joined to each other, measurement is performed at 20 points on the surface (fracture surface) of each of the two high-strength steel sheet portions 11H, thereby obtaining measurement results at 40 points in total. A value obtained by averaging these measurement results is regarded as the oxygen concentration of the corona bond 122 at which the solid-phase joining is performed between the high-strength steel sheet portion and the other steel sheet portion at a position 50 $\mu$m apart outward from the outer circumference of the nugget 121.

A method for determining presence or absence of the coating layer in the corona bond 122 is as follows. The surface (fracture surface) of the corona bond 122 is exposed in the same procedure as the measurement of the oxygen concentration of the corona bond 122. A chemical composition of the coating layer is different from a chemical composition of the base steel sheet. Hence, the presence or absence of the coating layer can be easily visually recognized by performing EDX analysis on the surface (fracture surface) of the corona bond. The presence or absence of the coating layer may also be determined for the sample used for measuring the oxygen concentration of the corona bond 122.

The carbon content of the steel sheet portion 11 is measured in accordance with "Iron and steel - Determination of carbon - Part 3: infrared absorption method after combustion" of JIS G 1211-3:2018. A sample for measuring the carbon content is extracted from a location 10 to 30 mm apart from the center of the spot-welded portion. At the time of extraction of the sample, the surface of the steel sheet portion is cut by 0.1 mm or more, and thereby coating and contamination are removed. This measurement method is also applied to the measurement of the carbon content of steel members before spot welding to be described below.

A method for measuring the carbon content of the nugget 121 is as follows. First, the nugget 121 is cut along a plane which passes through the center of the nugget 121 in the plan view of the nugget 121 in a direction perpendicular to the surface of the steel sheet portion 11 and is perpendicular to the surface of the steel sheet portion 11. Subsequently, the cut surface is etched to expose the nugget 121. Areas of the nuggets 121 in respective steel sheet portions appearing in the cut surface are measured, and the total of products of carbon contents of respective steel sheets and areas of the nuggets 121 in the respective steel sheets is divided by the areas of the nuggets 121, and thereby the carbon contents of the nuggets 121 are calculated. The "area of the nugget 121" is an area of the nugget measured at a corresponding cut surface. The "areas of the nuggets 121 in the respective steel sheet portions" are areas of respective nugget regions present on sides of the steel sheet portions of divided nugget regions obtained by dividing the nugget 121 using a straight line connecting corona bonds appearing at both ends of the nugget 121 as a boundary line (hereinafter, referred to as a boundary line) in the cut surface. Specifically, the carbon content of the nugget is calculated from the following expression.

$$\text{Carbon content of nugget (\%)} =$$

$$(S1 \times C1 + S2 \times C2 + \cdots + Sn \times Cn)/(S1 + S2 + \cdots + Sn)$$

S1: Nugget area of first steel sheet portion (mm$^2$)

C1: Carbon content of first steel sheet portion (mass%)
S2: Nugget area of second steel sheet portion (mm$^2$)
C2: Carbon content of second steel sheet portion (mass%)
Sn: Nugget area of n-th steel sheet portion (mm$^2$)
Cn: Carbon content of n-th steel sheet portion (mass%)

For example, in the cross-sectional view of the spot-welded joint illustrated in FIG. 1, in a case where a steel sheet portion 11 disposed on the upper side is regarded as the "first steel sheet portion" and the high-strength steel sheet portion 11H disposed on the lower side is regarded as the "second steel sheet portion", the broken line illustrated in the nugget 121 represents the boundary line, an area of a region above the broken line in the nugget 121 is represented by S1, and an area of a region below the broken line in the nugget 121 is represented by S2.

On the same steel sheet portion 11, it is considered that, instead of the nugget set as a target of the carbon content measurement, the oxygen concentration of a corona bond around another nugget is measured as the oxygen concentration of the corona bond around the same nugget. Specifically, from a spot-welded joint, a sample is taken out as the same sheet-shaped portion having a plurality of spot-welded portions, two adjacent spot-welded portions thereof are set as measurement targets, and measurement results from respective spot-welded portions are regarded as measurement results from the same spot-welded portion.

A method for measuring the diameter of the nugget 121 is as follows. First, the nugget 121 is cut along a plane which passes through the center of the nugget 121 in the plan view of the nugget 121 in a direction perpendicular to the surface of the steel sheet portion 11 and is perpendicular to the surface of the steel sheet portion 11.

Subsequently, the cut surface is etched to expose the nugget 121. Then, a diameter of a nugget with respect to the thinnest steel sheet portion is measured. In JIS Z 3001-6:2013, the diameter of the nugget portion measured at the joining interface by the cross-sectional test of the spot-welded portion is defined as the nugget diameter. In the present embodiment, the diameter of a nugget is a nugget width measured on a boundary line between two adjacent steel sheet portions. In the case of two or more boundary lines, diameters of nuggets are measured on respective boundary lines.

The diameter of the nugget may be measured on the cross section of the nugget from which the carbon content is measured. On the other hand, in the case of the same steel sheet portion 11, a diameter of a nugget other than the nugget which is the target of the oxygen concentration measurement and the carbon content measurement may be measured as a diameter of the same nugget. Specifically, from a spot-welded joint, a sample is taken out as the same sheet-shaped portion having a plurality of spot-welded portions, two adjacent spot-welded portions thereof are set as measurement targets, and an average value of measurement results from respective spot-welded portions is regarded as a measurement result from the same spot-welded portion.

<Method for Producing Spot-welded joint 1 According to Second Embodiment>

Next, a method for producing the spot-welded joint 1 according to a second embodiment of the present invention will be described. As illustrated in FIGS. 3A to 3C, the method for producing the spot-welded joint 1 according to the second embodiment includes a step of forming a surface treatment part 24 on a surface of a high-strength steel member 2H having a Vickers hardness of 530 HV or higher, a step of overlaying a plurality of steel members 2 such that the surface treatment part 24 is disposed on a mating surface between the high-strength steel member 2H and another steel member 2, and a step of spot welding the plurality of steel members 2 such that a nugget 121 and a corona bond 122 are accommodated on an inner side of the surface treatment part 24 in a plan view in a direction perpendicular to a surface of the surface treatment part 24. In the step of overlaying, a coating layer is not provided in the surface treatment part 24 and a region in contact with the surface treatment part 24. The surface treatment part 24 has a ten-point average roughness of 3.5 μm or lower, and the surface treatment part 24 has an oxygen concentration of 18.0 mass% or lower.

The term "steel member 2" means a material (that is, a base material) of the "steel sheet portion 11" included in the spot-welded joint 1 according to the first embodiment. On the spot-welded steel member 2, a flat part on the same surface as the spot-welded portion is the steel sheet portion 11. Similarly, the term "high-strength steel member 2H" means a material of the "high-strength steel sheet portion 11H" included in the spot-welded joint 1 according to the first embodiment. On the spot-welded high-strength steel member 2H, a flat part on the same surface as the spot-welded portion is the high-strength steel sheet portion 11H.

(Step S1 of Forming Surface Treatment Part 24)

First, as illustrated in FIG. 3A, the surface treatment part 24 is formed on a surface of the high-strength steel member 2H having the Vickers hardness of 530 HV or higher. However, in a case where the spot-welded joint is produced by providing a high-strength steel sheet having the surface treatment part 24 in advance, a step S1 of forming the surface treatment part 24 can be omitted from the method for producing a spot-welded joint. The "surface" of the high-strength steel member 2H on which the surface treatment part 24 is formed means a surface on which an electrode for spot welding can be disposed. Hence, the "surface" indicates a concept in which an "end surface" (that is, a cut surface and the like formed by cutting out a steel member from a steel sheet which is a raw material) is not included. As will be described below, the nugget 121 and the corona bond 122 are formed in the surface treatment part 24. By controlling a surface state of the surface treatment part 24 in advance, the oxygen concentration of the corona bond 122 can be set to 15.0 mass% or lower.

In the surface treatment part 24, the ten-point average roughness of the surface treatment part 24 is 3.5 $\mu$m or lower, and the oxygen concentration is 18.0 mass% or lower. By setting the ten-point average roughness of the surface treatment part 24 of the high-strength steel member 2H to 3.5 $\mu$m or lower, a surface area of the surface treatment part 24 can be reduced, and thus an oxygen concentration in the surface treatment part 24 can be reduced. In addition, according to the experimental results obtained by the present inventors, an oxide is discharged to the outside of the corona bond 122 due to thermal expansion of the nugget 121 at the time of spot welding, and thus the oxygen concentration decreases. Therefore, before the spot welding, if the ten-point average roughness of the surface treatment part 24 is set to 3.5 $\mu$m or lower, and the oxygen concentration of the surface treatment part 24 is set to 18.0 mass% or lower, the oxygen concentration of the corona bond 122 formed in the surface treatment part 24 can be set to 15.0 mass% or lower. In a case where the high-strength steel member 2H and the normal steel member 2 are combined, there is no need to control the ten-point average roughness and the oxygen concentration in a surface of the normal steel member 2 in contact with the high-strength steel member 2H. The oxygen concentration of the surface treatment part 24 may be 16.5 mass% or lower, 16.0 mass% or lower, or 15.0 mass% or lower. The surface treatment part having the above-described configuration may be formed on a surface of the high-strength steel member 2H having at least the Vickers hardness of 530 HV or higher. More preferably, the surface treatment part having the above-described configuration is also formed on the surface of the normal steel member 2 having a Vickers hardness of less than 530 HV.

A method for measuring the Vickers hardness of the high-strength steel member 2H is the same as the method for measuring the Vickers hardness of the steel sheet portion of the spot-welded joint 1 according to the first embodiment except for the measurement position. The measurement position is a position 1/4t deep from the surface of the high-strength steel member 2H in a cross section of the high-strength steel member 2H.

A method for measuring the ten-point average roughness of the surface treatment part 24 of the high-strength steel member 2H is as follows. The ten-point average roughness at any measurement point of the surface treatment part 24 is measured based on "ten-point average roughness" in Appendix JA of JIS B0601: 2013. The definition of the ten-point average roughness is based on the standards in 2013. The measurement length is set to 4 mm, and a cutoff is set to 0.8 mm.

A method for measuring the oxygen concentration of the surface treatment part 24 of the high-strength steel member 2H is the same as the method for measuring the oxygen concentration of the corona bond 122 of the spot-welded joint 1 according to the first embodiment except for the peel test and the measurement position. That is, the surface EDX analysis may be performed at an acceleration voltage of 15 KV on the surface treatment part 24 of the high-strength steel sheet portion 11H. However, since the nugget 121 is not formed in the surface treatment part 24, intervals between measurement points are set to 10 $\mu$m, five measurement points are set, and positions of these measurement points are any locations inside the surface treatment part 24.

The steel member 2 and the high-strength steel member 2H may have a coating layer. However, the coating layer is not provided in the surface treatment part 24. In a case where the high-strength steel member 2H is a non-coated steel member 2, there is no need to remove the coating layer, and the ten-point average roughness and the oxygen concentration of the surface treatment part 24 fall within the above-described ranges.

In a case where the high-strength steel member 2H is a coated steel member 2, the coating layer needs to be first removed from the surface treatment part 24, and then the ten-point average roughness and oxygen concentration of the surface treatment part 24 need to be set within the above-described ranges. In a case where the removal of the coating layer and the forming of the surface treatment part are performed by one treatment, a temperature of the surface treatment part increases, and it becomes difficult to set the oxygen concentration within the above-described range.

The surface treatment part 24 may be formed on the surface of the high-strength steel member 2H. In a case where two high-strength steel members 2H are overlaid, the surface treatment part 24 is provided on both the high-strength steel members 2H. On the other hand, in a case where the high-strength steel member 2H and the normal steel member 2 having a Vickers hardness of less than 530 HV are overlaid, there is no need to provide the surface treatment part 24 on the normal steel member 2. In addition, in a case where the normal steel member 2 overlaid on the high-strength steel member 2H is the coated steel member 2, at least the coating layer in at least a part of the coated steel member 2 needs to be removed.

In a case where the high-strength steel member 2H is disposed on the surface of the sheet assembly, the surface treatment part 24 may be provided on one surface of the high-strength steel member 2H. In a case where the high-strength steel member 2H is sandwiched between the other two steel members 2, the surface treatment part 24 is provided on both surfaces of the high-strength steel member 2H. In any case, the surface treatment part 24 may be provided only on a part of the surface of the high-strength steel member 2H or may be provided over the entire surface thereof. For example, in a case where the high-strength steel member is a hat-shaped member having a flange portion, a vertical wall portion, and a horizontal wall portion (top sheet portion), spot welding is performed on the flange portion. The surface treatment part may be formed only on a surface of the flange portion, or may be formed on a surface of any portion including the flange portion, the vertical wall portion, and the horizontal wall portion. The surface treatment part can be provided on one or both of an inner surface and an outer surface of the hat-shaped member. However, as described above, it is not necessary to provide the surface treatment part on an end surface.

(Step S2 of Overlaying Plurality of Steel Members 2)

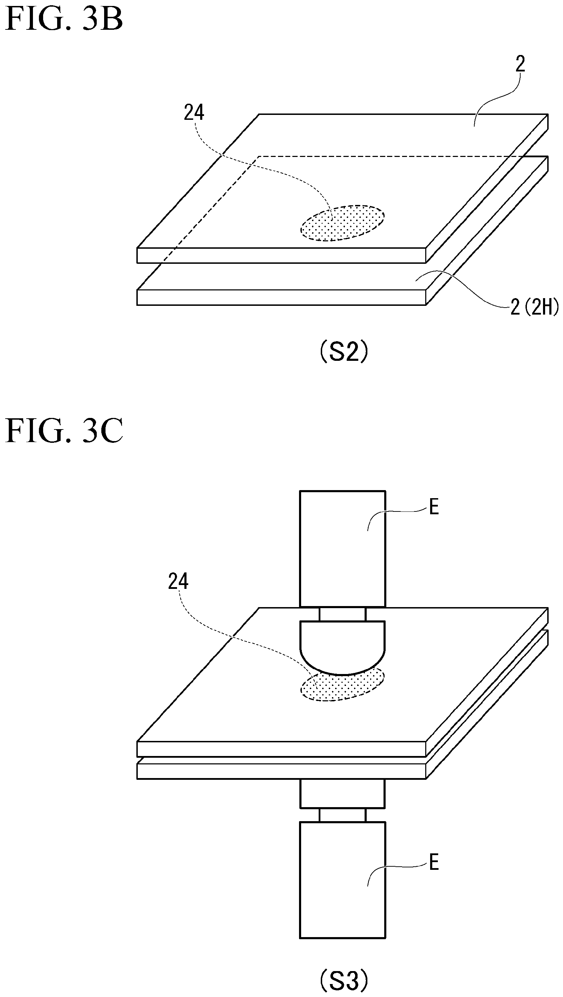

Next, as illustrated in FIG. 3B, a plurality of steel members 2 including the above-described high-strength steel member 2H are overlaid. At this time, the surface treatment part 24 formed on the high-strength steel member 2H is disposed on a mating surface of the steel member 2. In addition, the surface treatment part 24 formed on the high-strength steel member 2H needs to be prevented from coming into contact with the coating layer. That is, the coating layer is not provided not only in the surface treatment part 24 but also in a region in contact with the surface treatment part 24. In a case where the high-strength steel members 2H are overlaid on each other, the surface treatment parts 24 are overlaid on each other, and thus there is no need to perform a special treatment. On the other hand, in a case where the steel member 2 to be overlaid on the high-strength steel member 2H is a normal steel sheet and has a coating layer on an overlaying surface thereof, the coating layer needs to be removed in advance as described above, and the steel member 2 needs to be positioned so that a portion from which the coating layer is removed and the surface treatment part 24 are overlaid on each other.

(Step S3 of Spot-Welding Plurality of Steel Members 2)

Then, as illustrated in FIG. 3C, the plurality of steel members 2 are spot-welded. At this time, in a plan view in a direction perpendicular to the surface of the surface treatment part 24, a tapping point at which an electrode E and the steel member 2 are in contact with each other and the surface treatment part 24 are overlaid on each other so that the nugget and the corona bond are accommodated on the inner side of the surface treatment part 24, and the steel member 2 is spot-welded.

By producing the spot-welded joint 1 by the above-described procedure, the nugget 121 and the corona bond 122 can be formed in the surface treatment part 24 having the low ten-point average roughness and the low oxygen concentration and having no coating layer. That is, in the producing method according to the second embodiment, the coating layer is not present at the corona bond 122 formed on the surface of the high-strength steel sheet portion 11H of the spot-welded joint 1, and the oxygen concentration of the corona bond 122 formed on the surface of the high-strength steel sheet portion 11H can be set to 15.0 mass% or lower.

The method for producing the spot-welded joint 1 according to the second embodiment can obtain the TSS improvement effect as long as the above conditions are satisfied. On the other hand, a preferable aspect of the spot-welded joint 1 according to the first embodiment can also be applied to the producing method according to the second embodiment.

(Hot Stamping and Removal of Coating Layer)

The method for producing the spot-welded joint 1 may further include a step of hot-stamping the high-strength steel sheet. In this case, the high-strength steel sheet is preferably hot-stamped before the surface treatment part 24 is formed on the high-strength steel sheet. In the step of forming the surface treatment part 24, the surface treatment part 24 is preferably formed on the surface of the hot-stamped high-strength steel sheet. This makes it possible to avoid an increase in the oxygen concentration of the surface treatment part 24 due to heating for the hot stamping.

The method for producing the spot-welded joint 1 may include a step of removing a part of the coating layer on the surface of the high-strength steel member before the surface treatment part is formed. In this case, in the step of forming the surface treatment part, the surface treatment part is preferably formed in a region from which the coating layer has been removed. Consequently, a corona bond without a coating layer can be produced.

(Carbon Content of High-Strength Steel Member 2H: Preferably More Than 0.30 mass%)

(Carbon Content of Nugget 121: Preferably 0.29 mass% or More)

For example, similarly to the spot-welded joint 1 according to the first embodiment, a carbon content of the high-strength steel member 2H may be more than 0.30 mass% in the producing method according to the second embodiment. In addition, a carbon content of the nugget 121 may be 0.29 mass% or more. Consequently, various mechanical properties of the spot-welded joint 1 can be further enhanced. The preferred upper and lower limit values of the carbon content of the high-strength steel sheet portion 11H and the nugget 121 exemplified in the first embodiment can also be applied to the high-strength steel member 2H and the nugget 121 in the producing method according to the second embodiment.

The carbon content of the nugget 121 can be controlled by adjusting a carbon content of the steel member 2 and a sheet thickness. As the carbon content of the steel member 2 is increased, the carbon content of the nugget 121 can be increased. In addition, in a case where the spot-welded joint 1 is produced by combining a high carbon steel member and a low carbon steel member, the carbon content of the nugget 121 can be increased by increasing a ratio of a sheet thickness of the high carbon steel member to the total sheet thickness t.

A method for measuring the carbon content of the high-strength steel member 2H and an oxygen concentration of the nugget 121 is the same as the method for measuring the carbon content of the high-strength steel sheet portion 11H and the oxygen concentration of the nugget 121 of the spot-welded joint 1 according to the first embodiment.

(Hardness of High-Strength Steel Member 2H: 530 HV or Higher)

(Metallographic Structure of High-Strength Steel Member 2H: Preferably 90 area% or Larger of Martensite)

As described above, the Vickers hardness of the high-strength steel member 2H is 530 HV or higher. From the viewpoint of improving the strength and the like of the spot-welded joint 1, the higher the Vickers hardness of the high-strength steel member 2H, the more preferable. Hence, the Vickers hardness of the high-strength steel member 2H may be 550 HV or higher, 580 HV or higher, 600 HV or higher, or 620 HV or higher. The upper limit value of the Vickers hardness of the high-strength steel member 2H is not particularly limited, and the Vickers hardness of the high-strength steel member 2H may be 700 HV or lower, 680 HV or lower, or 650 HV or lower from the viewpoint of improving the joining strength and the like of the spot-welded joint 1.

The metallographic structures of the steel members 2 and the high-strength steel member 2H are not particularly limited. For example, 90 area% or more, 92 area% or more, or 95 area% or more of the metallographic structure of the high-strength steel member 2H may be martensite. Martensite indicates a concept in which both fresh martensite which is not tempered martensite and tempered martensite which is martensite subjected to tempering are included. The upper limit value of a proportion of martensite in the metallographic structure of the high-strength steel member 2H is not particularly limited, and for example, the proportion may be 100 area% or lower, 99 area% or lower, or 98 area% or lower.

(Diameter of Nugget 121: Preferably 4.5√t or Larger)

A diameter D of the nugget 121 may be 4.5√t or larger. Here, the diameter D of the nugget 121 is a size of the nugget 121 measured along a boundary line between adjacent steel members 2 on a plane passing through the center of the nugget 121 and perpendicular to the surfaces of the steel members 2. In addition, "t" represents the smaller one of sheet thicknesses of the two adjacent steel members 2 forming the boundary line serving as a reference for measurement of the nugget 121. In a case where three or more steel members 2 are spot-welded, and two or more boundary lines are formed, two or more diameters D and two or more sheet thicknesses t corresponding to the two or more boundary lines are identified.

When $D \geq 4.5\sqrt{t}$ is satisfied, the amount of oxides discharged from the corona bond 122 can be increased, and the oxygen concentration of the corona bond 122 can further be decreased. The diameter of the nugget 121 can be controlled by adjusting the amount of heat input of spot welding. As the diameter of the nugget 121 increases, the diameter of the corona bond 122 also increases. Therefore, it is preferable to determine the size of the surface treatment part 24 so that the corona bond 122 is formed on the inner side of the surface treatment part 24. In a case where three or more steel members 2 are provided, and two or more boundary lines are formed, it is preferable that $D \geq 4.5\sqrt{t}$ be satisfied at least at one boundary, and it is more preferable that $D \geq 4.5\sqrt{t}$ is more satisfied at all boundaries. In addition, on the boundary line formed by the high-strength steel member 2H, the diameter D of the nugget 121 and the sheet thickness t of the thinner one of the steel members 2 forming a corresponding boundary line preferably satisfy $D \geq 4.5\sqrt{t}$.

The method for measuring the diameter of the nugget 121 is the same as the method for measuring the diameter of the nugget 121 of the spot-welded joint 1 according to the first embodiment.

(Technique of Forming Surface Treatment Part 24: Preferably Shot Blasting or Wet Blasting)

A technique of forming the surface treatment part 24 is not particularly limited, and is preferably shot blasting or wet blasting. The shot blasting is a surface treatment in which blasting particles which are polishing powder are ejected. The wet blasting is a surface treatment in which slurry obtained by mixing a polish and a liquid is ejected.

The high-strength steel member 2H having a Vickers hardness of 530 HV or higher is preferably produced through a heat treatment such as quenching and tempering and hot stamping. Therefore, a large amount of oxidized scale adheres to the surface of the high-strength steel member 2H. The oxidized scale is usually removed by a technique such as pickling and shot blasting. However, as confirmed by the present inventors, after removing the oxidized scale by these normal techniques, the oxygen concentration of the high-strength steel member 2H was higher than 18.0 mass%, and the ten-point average roughness was also higher than 3.5 $\mu$m.

Various types of research made by the present inventors enabled the oxygen concentration of the high-strength steel member 2H to be reduced to 18.0 mass% by wet blasting. It has not been known until this time that effects of the wet blasting on reducing the oxygen concentration of the high-strength steel member 2H are better than those of the shot blasting. In addition, the wet blasting has a disadvantage that a time required to remove the oxidized scale is longer than that of the shot blasting. This is because the wet blasting has a working force smaller than that of the shot blasting because resistance of water is applied at the time of collision of the polish. Moreover, since water is used, the wet blasting has a disadvantage that it is necessary to add processes such as installation of drainage equipment and drying. Therefore, an example in which the wet blasting is used as pretreatment of the spot welding has not been reported until this time. However, in the producing method according to the second embodiment, the wet blasting is employed as a preferable surface treatment technique based on the above-described findings of the present inventors.

Materials of a polish used in the wet blasting are preferably, for example, steel, zirconia, stainless steel, or alumina. The shape of the polish is preferably, for example, a spherical shape or a grid shape. The average diameter of the polish is preferably 0.03 to 0.50 mm, for example. At the time of the wet blasting, the pressure of air for ejecting the blasting particles (that is, slurry obtained by mixing a polish and a liquid) is preferably 0.2 to 0.8 MPa, for example. The blasting distance (that is, the distance between a nozzle for ejecting the blasting particles and the high-strength steel member 2H) is preferably 1 to 30 cm, for example.

It is considered that the oxygen concentration or the ten-point average roughness of the high-strength steel member 2H can be decreased also by the shot blasting by reducing the diameter of the particles ejected in the shot blasting. However, in the shot blasting, heat such as frictional heat is generated during surface processing, and the oxygen concentration of the high-strength steel member 2H may increase. Hence, when the surface processing of the high-strength steel member 2H is performed using the shot blasting, it is preferable to appropriately set conditions such as an ejection speed of the particles in addition to the particle diameter, or to use a cooling technique. In addition, reduction in the particle size of the shot blasting has disadvantages such as that effects of air resistance increase, that it may be difficult to make the particles reach the high-strength steel member 2H, that moisture is likely to be formed, that the particles may not uniformly ejected or the nozzle may be clogged, and that dust is likely to fly to cause deterioration of a working environment.

A material of particles (blasting particles) used in the shot blasting is preferably, for example, steel, zirconia, stainless steel, or alumina. The shape of the blasting particles is preferably, for example, a spherical shape or a grid shape. The average diameter of the blasting particles is preferably, for example, 0.03 to 0.70 mm. At the time of the shot blasting, the pressure of air for ejecting the blasting particles is preferably, for example, 0.2 MPa to 1.0 MPa. The blasting distance (that is, the distance between a nozzle for ejecting the blasting particles and the high-strength steel member 2H) is preferably 5 to 40 cm, for example.

The blasting pressure in the wet blasting or the shot blasting, that is, the pressure of the air for ejecting the blasting particles is obtained by measuring the pressure of an air pipe into which the blasting particles are injected. The particle size of the blasting particles for the wet blasting or the shot blasting is obtained by measuring random 20 particles with a microscope and calculating an average value thereof. The blasting distance in the wet blasting or the shot blasting is obtained by measuring the distance from a blasting particle ejecting nozzle tip to a workpiece.

In addition, it is possible to reduce the oxygen concentration and the ten-point average roughness even by grinding or cutting. The grinding or cutting enables the coating layer to be removed. However, similarly to the shot blasting, in grinding and cutting, heat such as frictional heat is generated during surface processing, which may increase the oxygen concentration of the high-strength steel member 2H. Hence, when the surface processing of the high-strength steel member 2H is performed using the grinding or cutting, it is preferable to appropriately set conditions such as a working speed or use a cooling technique. **In** addition, the grinding or cutting has disadvantages of high working costs and a long machining time. For the above reasons, the wet blasting is considered to be the most preferable technique for forming the surface treatment part 24.

In a case where the surface treatment part is formed by grinding, it is preferable to reduce frictional heat by controlling a circumferential speed which is a rotational speed of a grindstone, a feed speed, a cutting amount, and a type and a flow rate of a grinding fluid. In a case where the surface treatment part is formed by cutting, it is preferable to reduce frictional heat by controlling the rotation speed, the feed speed, and the cutting amount of a tool.

<High-Strength Steel Member for Spot-welded joint According to Third Embodiment >

Next, a high-strength steel member for a spot-welded joint according to a third embodiment of the present invention will be described. A high-strength steel member for a spot-welded joint according to the third embodiment has a Vickers hardness of 530 HV or higher and has a surface treatment part without a coating layer, in which the surface treatment part has ten-point average roughness of 3.5 μm or lower, and an oxygen concentration of the surface treatment part is 18.0 mass% or lower.

The high-strength steel member according to the third embodiment has a Vickers hardness of 530 HV or higher. Hence, with the high-strength steel member according to the third embodiment, the spot-welded joint 1 having very high strength can be produced. However, the TSS of the spot-welded portion 12 obtained by spot-welding high-strength steel members having a Vickers hardness of 530 HV or higher deteriorates. Therefore, the high-strength steel member according to the third embodiment has the surface treatment part 24 having no coating layer, the ten-point average roughness of the surface treatment part 24 is 3.5 μm or lower, and the oxygen concentration of the surface treatment part 24 is 18.0 mass% or lower. In the corona bond 122 obtained by spot-welding the surface treatment part 24, no coating layer is present, and the oxygen concentration is 15.0 mass% or lower. This makes it possible to remarkably increase the TSS of the spot-welded joint 1.

The high-strength steel member for a spot-welded joint according to the third embodiment can obtain the TSS improvement effect of the spot-welded joint 1 as long as the conditions described above are satisfied. On the other hand, preferable aspects in both the spot-welded joint 1 according to the first embodiment and the method for producing the spot-welded joint 1 according to the second embodiment can also be applied to the high-strength steel member according to the third embodiment.

The method for measuring a Vickers hardness of the high-strength steel member according to the third embodiment is the same as the method for measuring the Vickers hardness of the high-strength steel member described in the method for producing the spot-welded joint 1 according to the second embodiment.

The method for measuring ten-point average roughness of the surface treatment part 24 of the high-strength steel member according to the third embodiment is the same as the method for measuring the ten-point average roughness of the surface treatment part 24 described in the method for producing a spot-welded joint according to the second embodiment.

The method for measuring an oxygen concentration of the surface treatment part 24 of the high-strength steel member according to the third embodiment is the same as the method for measuring the oxygen concentration of the surface treatment part described in the method for producing a spot-welded joint according to the second embodiment.

(Carbon Content: Preferably More Than 0.30 mass%)

(Position of Surface Treatment Part 24: Preferably One or Both of Entire Surfaces)

For example, similarly to the spot-welded joint 1 according to the first embodiment, a carbon content of the high-strength steel member for a spot-welded joint according to the third embodiment may be more than 0.30 mass%. Consequently, various mechanical properties of the spot-welded joint 1 can be further enhanced. Note that C contained in the high-strength steel member may cause embrittlement of the weld. However, according to the high-strength steel member for a spot-welded joint according to the third embodiment, the corona bond is modified using the surface treatment part, and the joining strength of a joint portion of the spot-welded joint is increased. Hence, even in a case where the carbon content is high, the high-strength steel member for a spot-welded joint according to the third embodiment can be used for producing a weld having high joining strength.

The carbon content of the high-strength steel member for a spot-welded joint is still more preferably 0.31 mass% or more, 0.33 mass% or more, 0.36 mass% or more, or 0.40 mass% or more. The carbon content of the high-strength steel member for a spot-welded joint is still more preferably 0.50 mass% or less, 0.48 mass% or less, 0.45 mass% or less, 0.42 mass% or less, or 0.40 mass% or less. In addition, similarly to the method for producing the spot-welded joint 1 according to the second embodiment, the surface treatment part 24 may be provided over one or both of the entire surfaces of the high-strength steel member.

A method for measuring the carbon content of the high-strength steel member is the same as the method for measuring the carbon content of the high-strength steel sheet portion 11H of the spot-welded joint 1 according to the first embodiment. However, a sample for measuring the carbon content is extracted from a location 10 to 30 mm apart from an end surface of the high-strength steel member. At the time of extraction of the sample, the surface of the steel sheet portion is cut by 0.1 mm or more, and thereby coating and contamination are removed.

<Method for Producing High-Strength Steel Member According to Fourth Embodiment>

Next, a method for producing a high-strength steel member 2H for a spot-welded joint according to a fourth embodiment of the present invention will be described. The method for producing a high-strength steel member 2H for a spot-welded joint according to the fourth embodiment of the present invention includes a step of forming a surface treatment part 24 on a surface of a high-strength steel member having a Vickers hardness of 530 HV or higher. A coating layer is not provided on the surface treatment part 24. The surface treatment part 24 has ten-point average roughness of

3.5 μm or lower, and an oxygen concentration of the surface treatment part 24 is 18.0 mass% or lower.

The high-strength steel member 2H obtained by the producing method according to the fourth embodiment has a Vickers hardness of 530 HV or higher. Hence, in the method for producing a high-strength steel member according to the fourth embodiment, it is possible to provide a steel sheet portion 11 which can be used for producing the very high-strength spot-welded joint 1. However, the TSS of the spot-welded portion 12 obtained by spot-welding high-strength steel members having a Vickers hardness of 530 HV or higher deteriorates. Therefore, in the method for producing a high-strength steel member according to the fourth embodiment, the surface treatment part 24 having ten-point average roughness of 3.5 μm or lower, the oxygen concentration of 18.0 mass% or lower, and no coating is formed. In the corona bond 122 obtained by spot-welding the surface treatment part 24, no coating layer 13 is present, and the oxygen concentration is 15.0 mass% or lower. Hence, in the method for producing a high-strength steel member according to the fourth embodiment, it is possible to provide a high-strength steel member which can remarkably increase the TSS of the spot-welded joint 1.

The method for producing a high-strength steel member according to the fourth embodiment can obtain the TSS improvement effect of the spot-welded joint 1 as long as the above conditions are satisfied. On the other hand, preferable aspects in all of the spot-welded joint 1 according to the first embodiment, the method for producing the spot-welded joint 1 according to the second embodiment, and the high-strength steel member for a spot-welded joint according to the third embodiment can also be applied to the method for producing a high-strength steel member according to the fourth embodiment.

A method for measuring the Vickers hardness of the high-strength steel member is the same as the method for measuring the Vickers hardness of the high-strength steel sheet portion in the method for producing the spot-welded joint 1 according to the second embodiment.

A method for measuring the ten-point average roughness and the oxygen concentration of the surface treatment part 24 of the high-strength steel member is the same as the method for measuring the ten-point average roughness and the oxygen concentration of the surface treatment part 24 in the method for producing a spot-welded joint according to the second embodiment.

(Hot Stamping and Removal of Coating Layer)

The method for producing a high-strength steel member may further include a step of hot-stamping a high-strength steel sheet. In this case, the high-strength steel sheet is preferably hot-stamped before the surface treatment part 24 is formed on the high-strength steel sheet. In the step of forming the surface treatment part 24, the surface treatment part 24 is preferably formed on the surface of the hot-stamped high-strength steel member. This makes it possible to avoid an increase in the oxygen concentration of the surface treatment part 24 due to heating for the hot stamping.

The method for producing the spot-welded joint 1 may include a step of removing a part of the coating layer on the surface of the high-strength steel member before the surface treatment part 24 is formed. In this case, in the step of forming the surface treatment part, the surface treatment part is preferably formed in a region from which the coating layer has been removed. Consequently, it is possible to provide the high-strength steel member that can be used for producing the corona bond without a coating layer.

(Carbon Content: Preferably More Than 0.30 mass%)

(Position of Surface Treatment Part 24: Preferably One or Both of Entire Surfaces)

(Technique of Forming Surface Treatment Part 24: Preferably Wet Blasting)

For example, similarly to the high-strength steel sheet portion 11H of the spot-welded joint 1 according to the first embodiment, a carbon content of the high-strength steel member 2H provided in the producing method according to the fourth embodiment may be more than 0.30 mass%. Consequently, various mechanical properties of the spot-welded joint 1 can be further enhanced. In addition, similarly to the method for producing the spot-welded joint 1 according to the second embodiment, the surface treatment part 24 may be provided over one or both of the entire surfaces of the high-strength steel member 2H. In addition, similarly to the method for producing a spot-welded joint according to the second embodiment, a technique of forming the surface treatment part 24 is not particularly limited, and preferably, this technique is the shot blasting or the wet blasting. In addition, the surface treatment part 24 may be formed by performing grinding. Various processing conditions for forming the surface treatment part 24 exemplified in the second embodiment may be applied to the producing method according to the fourth embodiment.

A method for measuring the carbon content of the high-strength steel member 2H is the same as the method for measuring the carbon content of the high-strength steel member according to the third embodiment.

Examples

The effect of one aspect of the present invention is described more specifically with reference to examples. However, the conditions in the examples are merely one condition example adopted to confirm the operability and effects of the present invention. The present invention is not limited to this one condition example. The present invention can adopt various conditions as long as the object of the present invention is achieved without departing from the gist of the present invention.

(Example 1)

Two high-strength steel sheets having a thickness of 1.6 mm and a Vickers hardness of 580 HV (tensile strength of 2,000 MPa) were spot-welded to produce a spot-welded joint. However, in an example of No. 20, a spot-welded joint obtained by spot-welding two normal steel sheets having a thickness of 1.6 mm and a Vickers hardness of 310 HV (tensile strength of 980 MPa) was used instead of the above-described high-strength steel sheet. In an example of No. 22, a spot-welded joint obtained by spot welding two normal steel sheets having a thickness of 1.6 mm and a Vickers hardness of 460 HV (tensile strength of 1,500 MPa) was used instead of the above-described high-strength steel sheet. The high-strength steel sheet having the tensile strength of 2,000 MPa was subjected to a heat treatment simulating a steel member after hot stamping, and the steel sheet having the tensile strength of 980 MPa and the steel sheet having the tensile strength of 1,500 MPa were normal cold-rolled steel sheets which were not subjected to a heat treatment.

Surface treatment parts were formed on surfaces of the two steel sheets before spot welding. The ten-point average roughness and the oxygen concentration of the surface treatment part are listed in Table 1.

The oxygen concentration of corona bonds and nugget diameters of various spot-welded joints obtained through the above-described procedure were measured and listed in Table 1. Further, TSS increase rates of the various spot-welded joints were evaluated and listed in Table 1.

The TSS increase rate is an increase rate of the TSS with respect to TSS reference values listed in Table 2. The TSS reference values represent the TSS of a spot-welded joint obtained by performing normal shot blasting treatment on two high-strength steel sheets each having a tensile strength corresponding to the thickness of 1.6 mm and then spot welding the two high-strength steel sheets. Since the TSS varies depending on the nugget diameters, reference values corresponding to the nugget diameters are listed in Table 2. Meanings of symbols of the TSS increase rates listed in Table 1 are as follows.

· Spot-welded joint having TSS lower than or equal to reference value: D

· Spot-welded joint having TSS increase rate of higher than 0% and 5% or lower with respect to reference value: C

· Spot-welded joint having TSS increase rate of higher than 5% and lower than 20% with respect to reference value: B

· Spot-welded joint having TSS increase rate of 20% or higher with respect to reference value: A

[Table 1]

| No. | Ten-point average roughness of surface treatment part (μm) | Surface oxygen content of surface treatment part (%) | Surface oxygen content of corona bond (%) | Nugget diameter (mm) | Carbon content of steel sheet and carbon content of nugget (%) | TSS increase rate | Note |
|---|---|---|---|---|---|---|---|
| 1 | 1.49 | 8.99 | 5.20 | 5√t | 0.35 | A | Present invention example |
| 2 | 4.12 | 21.91 | 18.30 | 5√t | 0.35 | D | Comparative example |
| 3 | 0.20 | 3.53 | 0.00 | 5√t | 0.35 | A | Present invention example |

(continued)

| No. | Ten-point average roughness of surface treatment part ($\mu$m) | Surface oxygen content of surface treatment part (%) | Surface oxygen content of corona bond (%) | Nugget diameter (mm) | Carbon content of steel sheet and carbon content of nugget (%) | TSS increase rate | Note |
|---|---|---|---|---|---|---|---|
| 4 | 3.00 | 16.06 | 12.20 | 5√t | 0.35 | B | Present invention example |
| 5 | 4.59 | 23.27 | 20.10 | 5√t | 0.35 | D | Comparative example |
| 6 | 3.40 | 17.70 | 14.50 | 5√t | 0.35 | C | Present invention example |
| 7 | 3.63 | 18.93 | 15.60 | 5√t | 0.35 | D | Comparative example |
| 8 | 3.07 | 16.19 | 13.00 | 5√t | 0.35 | C | Present invention example |
| 9 | 2.48 | 14.13 | 10.20 | 5√t | 0.35 | B | Present invention example |
| 10 | 2.43 | 13.55 | 10.00 | 5√t | 0.35 | B | Present invention example |
| 11 | 3.01 | 15.82 | 12.70 | 5√t | 0.35 | C | Present invention example |
| 12 | 2.65 | 14.45 | 11.00 | 5√t | 0.35 | B | Present invention example |
| 13 | 0.96 | 6.84 | 3.10 | 5.5√t | 0.35 | A | Present invention example |
| 14 | 2.09 | 12.27 | 8.40 | 6√t | 0.35 | B | Present invention example |
| 15 | 2.75 | 15.31 | 11.50 | 5√t | 0.35 | B | Present invention example |
| 16 | 2.05 | 15.50 | 12.30 | 4√t | 0.35 | C | Present invention example |
| 17 | 2.28 | 16.51 | 13.30 | 4.3√t | 0.35 | C | Present invention example |
| 18 | 2.48 | 13.39 | 10.20 | 4.5√t | 0.35 | B | Present invention example |

(continued)

| No. | Ten-point average roughness of surface treatment part (μm) | Surface oxygen content of surface treatment part (%) | Surface oxygen content of corona bond (%) | Nugget diameter (mm) | Carbon content of steel sheet and carbon content of nugget (%) | TSS increase rate | Note |
|---|---|---|---|---|---|---|---|
| 19 | 2.83 | 17.58 | 14.00 | 3√t | 0.35 | C | Present invention example |
| 20 | 3.30 | 16.78 | 13.20 | 5√t | 0.14 | D | Comparative example |
| 21 | 4.80 | 12.30 | 17.50 | 5√t | 0.35 | D | Comparative example |
| 22 | 2.71 | 14.55 | 11.30 | 5√t | 0.21 | D | Comparative example |

[Table 2]

| | | 580 HV TSS reference value (kN) | 460 HV TSS reference value (kN) | 310 HV TSS reference value (kN) |
|---|---|---|---|---|
| Nugget diameter (mm) | 3.0 | 10 | - | - |
| | 4.0 | 15 | - | - |
| | 4.3 | 17 | - | - |
| | 4.5 | 19 | - | - |
| | 5.0 | 23 | 28 | 25 |
| | 5.5 | 25 | - | - |
| | 6.0 | 27 | - | - |

In Comparative Examples 2, 5, and 7, the oxygen concentration of the corona bond was out of the range of the invention. In these comparative examples, an increase in TSS with respect to the TSS reference value was not observed. The reason why the oxygen concentration of the corona bond was high in these comparative examples is presumed to be that the oxygen concentration of the surface treatment part before spot welding was very high.

In Comparative Example 20, the oxygen concentration of the corona bond was within the range of the invention, but an increase in TSS with respect to the TSS reference value was not observed. This is presumed to be because values of the tensile strength of base materials of spot-welded joints of Comparative Example 20 were all 980 MPa. Similarly, also in Comparative Example 22, the oxygen concentration of the corona bond fell within the range of the invention, but an increase in TSS with respect to the TSS reference value is not observed. This is presumed to be because values of the tensile strength of base materials of spot-welded joints of Comparative Example 22 were all 1,500 MPa. A correlation between the oxygen concentration of the corona bond and the TSS was verified only in the high-strength steel sheet having a Vickers hardness of 530 HV or higher.

In Comparative Example 21, the oxygen concentration of the corona bond was out of the range of the invention. In these comparative examples, an increase in TSS with respect to the TSS reference value was not observed. The reason why the oxygen concentration of the corona bond was high in these comparative examples is presumed to be that, since the ten-point average roughness of the surface treatment part before spot welding was very high, the oxygen concentration of the corona bond increased through spot welding.

On the other hand, in an example within the range of the present invention, it was possible to provide a spot-welded joint that is excellent in TSS while including one or more high-strength steel sheets having a Vickers hardness of 530 HV or higher.

(Example 2)

Various high-strength steel sheets listed in Table 3 were subjected to hot stamping treatment to produce high-strength steel members. In the hot stamping treatment, the high-strength steel sheets were heated to 890°C, held for 5 minutes, and then cooled using a water-cooled die. Then, test pieces were taken out from flat surfaces of the high-strength steel members by laser cutting. The test pieces of these high-strength steel members were subjected to wet blasting in accordance with the conditions listed in Table 4, shot blasting in accordance with the conditions listed in Table 5, or cutting in accordance with the conditions listed in Table 6, and thereby surface treatment parts were formed. The ten-point average roughness and the oxygen concentration of the surface treatment parts were measured by the above-described techniques, and are listed in Table 7.

[Table 3]

| Steel member No. | Tensile strength (MPa) | Hardness (Hv) | Carbon content (mass%) | Sheet thickness (mm) | Coating |
|---|---|---|---|---|---|
| 1 | 2000 | 580 | 0.36 | 1.6 | None |
| 2 | 1850 | 550 | 0.33 | 1.6 | Zinc-based |
| 3 | 1500 | 460 | 0.25 | 1.4 | None |

[Table 4]

| Condition No. | Polish material of blasting particles | Blasting pressure (MPa) | Polish diameter (mm) | Blasting distance (cm) |
|---|---|---|---|---|
| W1 | SUS | 0.3 | 0.10 | 5 |
| W2 | SUS | 0.3 | 0.18 | 100 |
| W3 | SUS | 0.3 | 0.70 | 10 |

[Table 5]

| Condition No. | Material of blasting particles | Blasting pressure (MPa) | Blasting particle diameter (mm) | Blasting distance (cm) |
|---|---|---|---|---|
| S1 | Steel | 0.4 | 0.09 | 10 |
| S2 | Steel | 0.4 | 0.15 | 70 |
| S3 | Steel | 0.4 | 0.80 | 20 |

[Table 6]

| Condition No. | Rotation speed (rpm) | Cutting depth ($\mu$m) | Feed speed (m/min) |
|---|---|---|---|
| G1 | 30000 | 10 | 4.5 |
| G2 | 30000 | 60 | 4.5 |

[Table 7]

| Sample No. | Steel sheet No. | Condition No. | Coating removal before surface treatment | Ten-point average roughness ($\mu$m) | Oxygen concentration (%) |
|---|---|---|---|---|---|
| 1 | 1 and 1 | W1 | - | 2.3 | 3.4 |
| 2 | 1 and 1 | W2 | - | 3.0 | 23.5 |
| 3 | 1 and 1 | W3 | - | 7.5 | 16.1 |
| 4 | 1 and 1 | S1 | - | 2.7 | 2.8 |
| 5 | 1 and 1 | S2 | - | 3.3 | 19.0 |

(continued)

| Sample No. | Steel sheet No. | Condition No. | Coating removal before surface treatment | Ten-point average roughness (μm) | Oxygen concentration (%) |
|---|---|---|---|---|---|
| 6 | 1 and 1 | S3 | - | 8.9 | 17.1 |
| 7 | 1 and 1 | G1 | - | 1.8 | 2.1 |
| 8 | 1 and 1 | G2 | - | 4.3 | 2.0 |
| 9 | 1 and 3 | G1 | - | 2.4 (Steel sheet 1) | 2.4 (Steel sheet 1) |
| 10 | 2 and 2 | G1 | Performed | 3.1 | 2.3 |
| 11 | 2 and 2 | G1 | Not performed | 3.3 | 16.3 |

Regarding sample No. 1 the wet blasting was performed under appropriate conditions. Regarding sample No. 1, the ten-point average roughness and the oxygen concentration of the surface treatment part formed by the wet blasting were appropriate.

Regarding sample No. 2, the blasting distance at the time of wet blasting was too long. Regarding sample No. 2, the oxygen concentration of the surface treatment part formed by the wet blasting was excessive. This is presumed to be because the blasting distance was too long, and thus the oxide present on the surface of the steel member was insufficiently removed.

Regarding sample No. 3, a diameter of a polish used at the time of wet blasting was too large. Regarding sample No. 3, both the ten-point average roughness and the oxygen concentration of the surface treatment part formed by the wet blasting were excessive. This is presumed to be because the diameter of the polish was too large, and thus the surface of the steel member became rough, and the oxide present on the surface was insufficiently removed.

Regarding sample No. 4, the shot blasting was performed under appropriate conditions. Regarding sample No. 4, the ten-point average roughness and the oxygen concentration of the surface treatment part formed by the shot blasting were appropriate.

Regarding sample No. 5, the blasting distance at the time of shot blasting was too long. Regarding sample No. 5, the oxygen concentration of the surface treatment part formed by the shot blasting was excessive. This is presumed to be because the blasting distance was too long, and thus the oxide present on the surface of the steel member was insufficiently removed.

Regarding sample No. 6, the diameter of the blasting particles used for the shot blasting was too large. Regarding sample No. 6, both the ten-point average roughness and the oxygen concentration of the surface treatment part formed by the shot blasting were excessive. This is presumed to be because the diameter of the blasting particles was too large, and thus the surface of the steel member became rough, and the oxide present on the surface was insufficiently removed.

Regarding sample No. 7, cutting was performed under appropriate conditions. Regarding sample No. 7, the ten-point average roughness and the oxygen concentration of the surface treatment part formed by the cutting were appropriate.

Regarding sample No. 8, a cutting depth at the time of cutting was too deep. Regarding sample No. 8, the ten-point average roughness of the surface treatment part formed by the cutting was excessive. This is presumed to be because the cutting depth was too deep, thus, chattering occurred, and the surface became rough.

Regarding sample 9, cutting was performed under appropriate conditions. Regarding sample No. 9, the ten-point average roughness and the oxygen concentration of the surface treatment part formed by the cutting were appropriate. For reference, the TSS of Sample 9 was measured and evaluated based on the TSS evaluation criteria used in Example 1, and a TSS increase rate of Sample 9 was 20% or higher. The reference value of the TSS increase rate in a welded joint obtained by combining steel member No. 1 and steel member No. 2 listed in Table 3 is 23 kN in a case where the nugget diameter is 5.0 mm, 25 kN in a case where the nugget diameter is 5.5 mm, and 27 kN in a case where the nugget diameter is 6.0 mm.

Regarding sample 10, a steel member having a zinc-based coating layer was used as a starting material. Regarding sample 10, first, the zinc-based coating layer of the steel member was removed to form a coating removed portion. Subsequently, after waiting for a temperature of the coating removed portion to be lowered to room temperature, cutting for forming a surface treatment part was performed. Regarding sample 10, the zinc-based coating layer was removed before forming the surface treatment part, and then cutting was performed under appropriate conditions. Regarding sample No. 10, the ten-point average roughness and the oxygen concentration of the surface treatment part formed by the cutting were appropriate.

Regarding sample 11, similarly to sample 10, a steel member having a zinc-based coating layer was used as a starting material. However, regarding sample 11, the zinc-based coating layer was not removed before cutting for forming the surface treatment part. Specifically, by cutting a location where the zinc-based coating layer is present under condition G1, the removal of the zinc-based coating layer and the forming of the surface treatment part were performed in one step. Regarding sample No. 11, the oxygen concentration of the surface treatment part formed by the cutting was excessive.

Brief Description of the Reference Symbols

    1 Spot-welded joint
    11 Steel sheet portion
    11H High-strength steel sheet portion
    12 Spot-welded portion
    121 Nugget
    122 Corona bond
    123 Corona bond portion
    13 Coating layer
    2 Steel member
    2H High-strength steel member
    24 Surface treatment part
    E Electrode
    Ox Oxide

**Claims**

1.  A spot-welded joint comprising:

    a plurality of steel sheet portions including a high-strength steel sheet portion having a Vickers hardness of 530 HV or higher;
    a nugget which joins the high-strength steel sheet portion and another steel sheet portion of the plurality of steel sheet portions; and
    a corona bond which is formed in a ring shape around the nugget in a plan view in a direction perpendicular to a surface of the high-strength steel sheet portion and which solid-phase-joins the high-strength steel sheet portion and the other steel sheet portion, wherein
    a coating layer is not present in a region where the corona bond is present, and
    an oxygen concentration of the corona bond at a position 50 $\mu$m apart outward from an outer circumference of the nugget in the plan view is 15.0 mass% or lower.

2.  The spot-welded joint according to claim 1, wherein the high-strength steel sheet portion has a carbon content of more than 0.30 mass%.

3.  The spot-welded joint according to claim 1 or 2, wherein the nugget has a carbon content of 0.29 mass% or more.

4.  The spot-welded joint according to claim 1 or 2, wherein a diameter of the nugget measured along a boundary line between the steel sheet portions adjacent to each other is $4.5\sqrt{t}$ or larger in a cross section passing through a center of the nugget and perpendicular to surfaces of the steel sheet portions,
    and wherein t representing a smaller one of sheet thicknesses of the two adjacent steel sheet portions forming the boundary line.

5.  A method for producing a spot-welded joint, comprising:

    providing a high-strength steel member having a surface treatment part and having a Vickers hardness of 530 HV or higher;
    overlaying a plurality of steel members such that the surface treatment part is disposed on a mating surface between the high-strength steel member and another steel member; and
    spot welding the plurality of steel members such that a nugget and a corona bond are accommodated on an inner side of the surface treatment part in a plan view in a direction perpendicular to the surface treatment part, wherein
    in overlaying, a coating layer is not provided in the surface treatment part and a region in contact with the surface treatment part, and
    the surface treatment part has a ten-point average roughness of 3.5 $\mu$m or lower, and the surface treatment part has an oxygen concentration of 18.0 mass% or lower.

6. The method for producing a spot-welded joint according to claim 5, further comprising forming the surface treatment part on a surface of the high-strength steel member before providing the high-strength steel member.

7. The method for producing a spot-welded joint according to claim 6, further comprising hot-stamping a high-strength steel sheet before forming the surface treatment part, wherein
in forming the surface treatment part, the surface treatment part is formed on the surface of the hot-stamped high-strength steel member.

8. The method for producing a spot-welded joint according to claim 6 or 7, further comprising removing a part of a coating layer on the surface of the high-strength steel member before forming the surface treatment part, wherein
in forming the surface treatment part, the surface treatment part is formed in a region from which the coating layer is removed.

9. The method for producing a spot-welded joint according to claim 5 or 6, wherein the high-strength steel member has a carbon content of more than 0.30 mass%.

10. The method for producing a spot-welded joint according to claim 5 or 6, wherein the nugget formed by the spot welding has a carbon content of 0.29 mass% or more.

11. The method for producing a spot-welded joint according to claim 5 or 6, wherein a diameter of the nugget formed by the spot welding is $4.5\sqrt{t}$ or larger,
and wherein, the diameter of the nugget being a size of the nugget measured along a boundary line between the steel members adjacent to each other in a plane passing through a center of the nugget and perpendicular to surfaces of the steel members, and t representing a smaller one of sheet thicknesses of the two adjacent steel members forming the boundary line.

12. The method for producing a spot-welded joint according to claim 6 or 7, wherein the surface treatment part is formed by shot blasting or wet blasting.

13. A high-strength steel member for a spot-welded joint, wherein

a Vickers hardness is 530 HV or higher,
a surface treatment part having no coating layer is provided,
the surface treatment part has a ten-point average roughness of 3.5 $\mu$m or lower, and
an oxygen concentration of the surface treatment part is 18.0 mass% or lower.

14. The high-strength steel member for a spot-welded joint according to claim 13, wherein a carbon content is more than 0.30 mass%.

15. The high-strength steel member for a spot-welded joint according to claim 13 or 14, wherein the surface treatment part is provided all over a surface of the high-strength steel member.

16. A method for producing a high-strength steel member for a spot-welded joint, comprising forming a surface treatment part on a surface of a high-strength steel member having a Vickers hardness of 530 HV or higher, wherein

a coating layer is not provided on the surface treatment part,
the surface treatment part has a ten-point average roughness of 3.5 $\mu$m or lower, and
an oxygen concentration of the surface treatment part is 18.0 mass% or lower.

17. The method for producing a high-strength steel member for a spot-welded joint according to claim 16, further comprising hot-stamping a high-strength steel sheet before forming the surface treatment part, wherein
in forming the surface treatment part, the surface treatment part is formed on the surface of the hot-stamped high-strength steel member.

18. The method for producing a high-strength steel member for a spot-welded joint according to claim 16 or 17, further comprising removing a part of a coating layer on the surface of the high-strength steel member before forming the surface treatment part, wherein
in forming the surface treatment part, the surface treatment part is formed in a region from which the coating layer is removed.

19. The method for producing a high-strength steel member for a spot-welded joint according to claim 16 or 17, wherein the high-strength steel member has a carbon content of more than 0.30 mass%.

20. The method for producing a high-strength steel member for a spot-welded joint according to claim 16 or 17, wherein the surface treatment part is provided all over the surface of the high-strength steel member.

21. The method for producing a high-strength steel member for a spot-welded joint according to claim 16 or 17, wherein the surface treatment part is formed by shot blasting or wet blasting.

# FIG. 1

# FIG. 2A

(NUGGET DIAMETER 3√t)

# FIG. 2B

Ox

123

121
THERMAL
EXPANSION

E

E

(NUGGET DIAMETER 5√t)

# FIG. 3A

24

2 (2H)

(S1)

# FIG. 3B

(S2)

# FIG. 3C

(S3)

## INTERNATIONAL SEARCH REPORT

| International application No. |
|---|
| **PCT/JP2023/010115** |

| **A.** | **CLASSIFICATION OF SUBJECT MATTER** |
|---|---|

*B23K 11/16*(2006.01)i; *B23K 11/11*(2006.01)i; *C22C 38/00*(2006.01)i; *C22C 38/02*(2006.01)i
FI:   B23K11/16; B23K11/11 540; C22C38/00 301T; C22C38/02

According to International Patent Classification (IPC) or to both national classification and IPC

| **B.** | **FIELDS SEARCHED** |
|---|---|

Minimum documentation searched (classification system followed by classification symbols)

B23K11/16; B23K11/11; C22C38/00; C22C38/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | JP 2020-69525 A (NIPPON STEEL CORP) 07 May 2020 (2020-05-07)<br>    paragraphs [0038]-[0039], [0046] | 13-16, 19-20 |
| A | | 1-12, 17-18, 21 |
| Y | JP 7-32056 A (KAWASAKI STEEL CORP) 03 February 1995 (1995-02-03)<br>    paragraph [0018] | 13-16, 19-20 |
| A | | 1-12, 17-18, 21 |
| Y | JP 2019-35107 A (NIPPON STEEL & SUMITOMO METAL CORP) 07 March 2019<br>(2019-03-07)<br>    paragraph [0087] | 13-16, 19-20 |
| A | | 1-12, 17-18, 21 |
| A | JP 2012-102370 A (NIPPON STEEL CORP) 31 May 2012 (2012-05-31)<br>    entire text, all drawings | 1-21 |
| A | JP 2018-162477 A (JFE STEEL CORP) 18 October 2018 (2018-10-18)<br>    entire text, all drawings | 1-21 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **19 May 2023** | **30 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/010115**

| Patent document cited in search report | | | Publication date (day/month/year) | Patent family member(s) | Publication date (day/month/year) |
|---|---|---|---|---|---|
| JP | 2020-69525 | A | 07 May 2020 | (Family: none) | |
| JP | 7-32056 | A | 03 February 1995 | (Family: none) | |
| JP | 2019-35107 | A | 07 March 2019 | (Family: none) | |
| JP | 2012-102370 | A | 31 May 2012 | (Family: none) | |
| JP | 2018-162477 | A | 18 October 2018 | (Family: none) | |

Form PCT/ISA/210 (patent family annex) (January 2015)

**REFERENCES CITED IN THE DESCRIPTION**

**Patent documents cited in the description**

- JP 2022040299 A
- JP 2020179413 A
- JP 2012102370 A
- JP 2014180698 A